# EUROPEAN PATENT APPLICATION

(11) **EP 4 549 412 A1**
(43) Date of publication of application: **07.05.2025**
(21) Application number: 23831618.6
(22) Date of filing: 30.06.2023
(51) Int. Cl.: C03C 27/12, B32B 7/023, B32B 17/06, B32B 17/10, B60J 1/00, B60J 1/02, C03C 3/087

(54) **LAMINATED GLASS FOR MOTOR VEHICLE**

(30) Priority: 01.07.2022 JP 2022107395
(71) Applicant: Nippon Sheet Glass Company, Limited, Tokyo 108-6321 (JP)
(72) Inventor: CHIBA, Kazuki, Tokyo 108-6321 (JP)
(74) Representative: Fortt, Simon Merton
(86) International application number: PCT/JP2023/024340
(87) International publication number: WO 2024/005179

(57) **Abstract**

The present invention is a windshield configured to make image light from a head-up display device attached inside a vehicle enter from an inclined direction, including an inner glass plate disposed on a vehicle interior side, an outer glass plate disposed opposite the inner glass plate on a vehicle exterior side, and an interlayer that bonds the outer glass plate and the inner glass plate to each other, wherein the interlayer includes a reflective film having a reflective surface capable of reflecting the image light, and a luminance of the image light reflected by the reflective surface is increased.

## Description

### Technical Field

The present invention relates to laminated glass for automobiles.

### Background Art

There has conventionally been proposed a head-up display device (HUD device) that projects information such as a vehicle speed by irradiating a windshield of a vehicle with image light. Using this HUD device allows the driver to check the vehicle speed by looking at the information projected on the windshield instead of an in-vehicle instrument such as a speedometer, which eliminates the need of moving the eyes watching forward to a large extent during driving. Therefore, there is an advantage that safety during driving can be improved.

### Citation List

### Patent Literature

PTL 1: Japanese Patent Laid-open Publication No. 2007-223883

### Summary of Invention

### Technical Problem

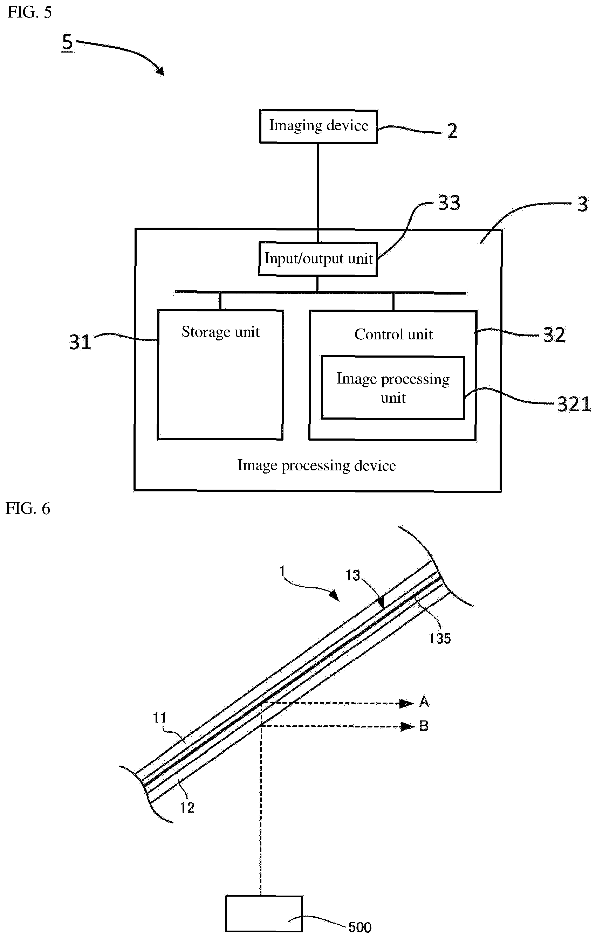

When the HUD device is used, an attempt has been made to improve visibility of image light by disposing a reflective film capable of reflecting image light on an interlayer of a windshield. However, as illustrated in Fig. 6, the image light applied to a windshield 1 generates a main image A visually recognized by being reflected by a reflection film 135 and a sub image B visually recognized by being reflected by the surface of on the vehicle interior side of the windshield 1. Thus, there is a problem that a double image phenomenon occurs in which these two images A and B appear to be shifted from each other and the image light becomes difficult to see.

The present invention has been made to solve the above problem, and an object of the present invention is to provide a windshield capable of inhibiting discomfort caused by a double image phenomenon.

### Solution to Problem

Item 1. A windshield configured to make image light including visible light from a head-up display device attached inside a vehicle enter from an inclined direction, the windshield including:
an inner glass plate disposed on a vehicle interior side;
an outer glass plate disposed opposite the inner glass plate on a vehicle exterior side; and
an interlayer that bonds the outer glass plate and the inner glass plate to each other,
in which the interlayer includes a reflective film having a reflective surface capable of reflecting the image light, and
a luminance of the image light reflected by the reflective surface is increased.

Item 2. The windshield according to Item 1, in which the inner glass plate has a visible light transmittance larger than a visible light transmittance of the outer glass plate.

Item 3. The windshield according to Item 1 or 2, in which the inner glass plate has a thickness larger than a thickness of the outer glass plate.

Item 4. The windshield according to any one of Items 1 to 3, in which total iron oxide (T-Fe₂O₃) converted into Fe₂O₃ in a composition of the inner glass plate is smaller than total iron oxide converted into Fe₂O₃ in a composition of the outer glass plate.

Item 5. The windshield according to Item 4, in which the total iron oxide (T-Fe₂O₃) converted into Fe₂O₃ in the composition of the inner glass plate is smaller than 0.6 wt%.

Item 6. The windshield according to Item 4, in which the total iron oxide (T-Fe₂O₃) converted into Fe₂O₃ in the composition of the outer glass plate is larger than 0.3 wt%.

Item 7. The windshield according to any one of Items 1 to 6, in which a low reflection layer is disposed on a surface of the inner glass plate, the surface being on the vehicle interior side.

Item 8. The windshield according to any one of Items 1 to 7, in which
the interlayer further includes:
   a first bonding layer disposed between the reflective film and the outer glass plate; and
   a second bonding layer disposed between the reflective film and the inner glass plate,
at least one of the first bonding layer and the second bonding layer contains an ultraviolet absorber and/or an infrared absorber, and
an addition amount of the ultraviolet absorber and/or the infrared absorber in the first bonding layer is larger than an addition amount of the ultraviolet absorber and/or the infrared absorber in the second bonding layer.

Item 9. The windshield according to any one of Items 1 to 8, in which
the interlayer further includes:
   a first bonding layer disposed between the reflective film and the outer glass plate; and
   a second bonding layer disposed between the reflective film and the inner glass plate,
the first bonding layer contains at least one of an ultraviolet absorber and/or an infrared absorber, and
the second bonding layer contains no ultraviolet absorber and no infrared absorber.

Item 10. The windshield according to any one of Items 1 to 9, the windshield further including an infrared ray reflection layer disposed on the vehicle exterior side with respect to the reflective film.

Item 11. The windshield according to Item 10, in which the infrared ray reflection layer is provided on the outer glass plate.

Item 12. The windshield according to Item 10, in which
the interlayer further includes:
   a first bonding layer disposed between the reflective film and the outer glass plate; and
   a second bonding layer disposed between the reflective film and the inner glass plate, and
the infrared reflective film is disposed in the first bonding layer.

Item 13. The windshield according to Item 10, in which the infrared ray reflection layer is formed of multiple layers.

### Advantageous Effects of Invention

The present invention can inhibit discomfort caused by the double image phenomenon.

### Brief Description of Drawings

[Fig. 1] Fig. 1 is a plan view showing an embodiment in which a laminated glass for automobiles according to the present invention is applied to a windshield.
[Fig. 2] Fig. 2 is a sectional view of Fig. 1.
[Fig. 3] Fig. 3 is a sectional view showing an interlayer of a first aspect.
[Fig. 4] Fig. 4 is a sectional view showing an interlayer of a second aspect.
[Fig. 5] Fig. 5 is an example of a block diagram of an in-vehicle system.
[Fig. 6] Fig. 6 is a diagram for describing a double image formed by a HUD device.
[Fig. 7] Fig. 7 is a table showing compositions and physical properties of windshields according to Examples and Comparative Examples.
[Fig. 8] Fig. 8 is a photograph of reflected light in Example 1 and Comparative Example 1, and a graph showing gradation values of the reflected light.

### Description of Embodiments

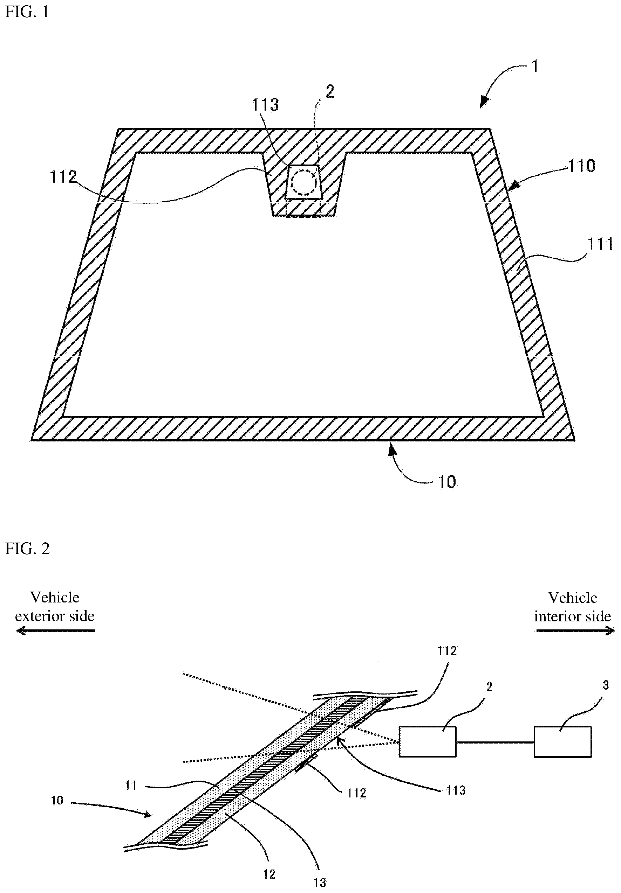

Hereinafter, an embodiment of a windshield according to the present invention will be described with reference to the drawings. Fig. 1 is a plan view of the windshield, and Fig. 2 is a sectional view of Fig. 1. For convenience of description, the up-down directions in Fig. 1 will be referred to as "up-down", "vertical", and "longitudinal", and the right and left directions in Fig. 1 will be referred to as "right-left". Fig. 1 illustrates a windshield viewed from the vehicle interior side. That is, the back side of the paper surface of Fig. 1 is the vehicle exterior side, and the front side of the paper surface of Fig. 1 is the vehicle interior side.

As shown in Figs. 1 and 2, the windshield includes a laminated glass 10 having a substantially rectangular shape, and the windshield is installed on a vehicle body in an inclined state. A mask layer 110 that shields a visual field from the outside of the vehicle is laminated on the inner surface of the laminated glass 10 facing the vehicle interior side. In addition, an imaging device 2 in which a camera for imaging the circumstance outside the vehicle is built is attached to the mask layer 110 via a bracket (not illustrated). The mask layer 110 is provided with an imaging window 113 at a position corresponding to the imaging device 2, and the imaging device 2 can image the circumstance outside the vehicle via the imaging window 113.

The imaging device 2 is connected with an image processing device 3, and the captured image acquired by the imaging device 2 is processed by the image processing device 3. The imaging device 2 and the image processing device 3 constitute an in-vehicle system 5, and the in-vehicle system 5 can provide various types of information to the passenger according to the processing of the image processing device 3.

Further, a head-up display device (referred to as HUD device) 500 is provided in the vehicle. The HUD device 500 irradiates the windshield with image light of a vehicle speed, other characters, figures, and the like in order to project information such as the vehicle speed. Each component will be described below.

### <1. Laminated Glass>

### <1-1. Glass Plate>

First, an outer glass plate 11 and an inner glass plate 12 will be described. As the outer glass plate 11 and the inner glass plate 12, known glass plates can be used, and they may also be formed of heat ray absorbing glass, typical clear glass, green glass, dark green glass, or UV green glass. However, it is necessary for these glass plates 11 and 12 to realize visible light transmittance conforming to a safety standard of a country in which the automobile is used. For example, a required solar absorptivity may be secured by the outer glass plate 11, and the visible light transmittance may be adjusted to satisfy the safety standard by the inner glass plate 12. Hereinafter, examples of clear glass, heat ray absorbing glass, and soda-lime-based glass will be described.

### (Clear Glass)

SiO₂: 70 to 73 mass%
Al₂O₃: 0.6 to 2.4 mass%
CaO: 7 to 12 mass%
MgO: 1.0 to 4.5 mass%
R₂O: 13 to 15 mass% (R is an alkali metal)
Total iron oxide (T-Fe₂O₃) in terms of Fe₂O₃: 0.08 to 0.14 mass%

### (Heat Ray Absorbing Glass)

The composition of the heat ray absorbing glass may be, for example, a composition obtained by setting the ratio of total iron oxide (T-Fe₂O₃) in terms of Fe₂O₃ to 0.4 to 1.3 mass%, the ratio of CeO₂ to 0 to 2 mass%, the ratio of TiO₂ to 0 to 0.5 mass%, and subtracting the skeleton components (mainly SiO₂ and Al₂O₃) of the glass by an increase amount of T-Fe₂O₃, CeO₂, and TiO₂ based on the composition of the clear glass.

### (Soda-Lime-Based Glass)

SiO₂: 65 to 80 mass%
Al₂O₃: 0 to 5 mass%
CaO: 5 to 15 mass%
MgO: 2 mass% or more
NaO: 10 to 18 mass%
K₂O: 0 to 5 mass%
MgO + CaO: 5 to 15 mass%
Na₂O + K₂O: 10 to 20 mass%
SO₃: 0.05 to 0.3 mass%
B₂O₃: 0 to 5 mass%
Total iron oxide (T-Fe₂O₃) in terms of Fe₂O₃: 0.02 to 0.03 mass%

### (Green Glass)

SiO₂: 65 to 80 mass%
Al₂O₃: 0 to 5 mass%
CaO: 5 to 15 mass%
MgO: 2 mass% or more
NaO: 10 to 18 mass%
K₂O: 0 to 5 mass%
MgO + CaO: 5 to 15 mass%
Na₂O + K₂O: 10 to 20 mass%
SO₃: 0.05 to 0.3 mass%
B₂O₃: 0 to 5 mass%
Total iron oxide (T-Fe₂O₃) in terms of Fe₂O₃: 0.4 to 0.6 mass%

### (Dark Green Glass)

SiO₂: 65 to 80 mass%
Al₂O₃: 0 to 5 mass%
CaO: 5 to 15 mass%
MgO: 2 mass% or more
NaO: 10 to 18 mass%
K₂O: 0 to 5 mass%
MgO + CaO: 5 to 15 mass%
Na₂O + K₂O: 10 to 20 mass%
SO₃: 0.05 to 0.3 mass%
B₂O₃: 0 to 5 mass%
Total iron oxide (T-Fe₂O₃) in terms of Fe₂O₃: 0.7 to 1.3 mass%

In each of the glass plates 11 and 12, the visible light transmittance may also be adjusted. For this purpose, for example, the glass plates 11 and 12 are colored by adjusting the content of Fe₂O₃, whereby the visible light transmittance can be adjusted. For example, when the content of Fe₂O₃ increases, the glass is colored green, and the green glass or the dark green glass described above is obtained. On the other hand, when the content of Fe₂O₃ is small, the clear glass described above is obtained.

The thickness of the laminated glass 10 according to the present embodiment is not particularly limited, but the total thickness of the outer glass plate 11 and the inner glass plate 12 may be, for example, 2.1 to 6 mm, and from the viewpoint of weight reduction, the total thickness of the outer glass plate 11 and the inner glass plate 12 is preferably 2.4 to 3.8 mm, more preferably 2.6 to 3.4 mm, and particularly preferably 2.7 to 3.2 mm.

The outer glass plate 11 is mainly required to have durability and impact resistance against external obstacles, and is required to have impact resistance against a flying object such as a pebble as a windshield of an automobile. On the other hand, as the thickness increases, the weight increases, which is not preferable. From this viewpoint, the thickness of the outer glass plate 11 is preferably 1.8 to 2.3 mm, and more preferably 1.9 to 2.1 mm. The thickness to adopt may be determined according to the application of glass.

The thickness of the inner glass plate 12 may be made equal to that of the outer glass plate 11, but for example, the thickness may be made smaller than that of the outer glass plate 11 in order to reduce the weight of the laminated glass 10. Specifically, in consideration of the strength of glass, the thickness is preferably 0.6 to 2.0 mm, preferably 0.8 to 1.6 mm, and particularly preferably 1.0 to 1.4 mm. Further, the thickness is preferably 0.8 to 1.3 mm. The thickness of each of the glass plates 11 and 12 to adopt will be described later.

As will be described in detail later, the laminated glass 10 is curved toward the outside of the vehicle. In this case, the thickness is measured at two positions above and below a center line (curve OP to be described later) extending in the up-down direction at the center of the laminated glass 10 in the right-left direction. The measuring instrument is not particularly limited, but for example, a thickness gauge such as SM-112 manufactured by TECLOCK Corporation may be used. At the time of measurement, the laminated glass 10 is disposed in such a manner that the curved surface of the laminated glass 10 is placed on a flat surface, and an end of the laminated glass 1 is sandwiched and measured by the thickness gauge.

### <1-2. Interlayer>

In the present embodiment, the interlayer 13 may be formed in various aspects. Hereinafter, two aspects will be described.

### <1-2-1. First Aspect>

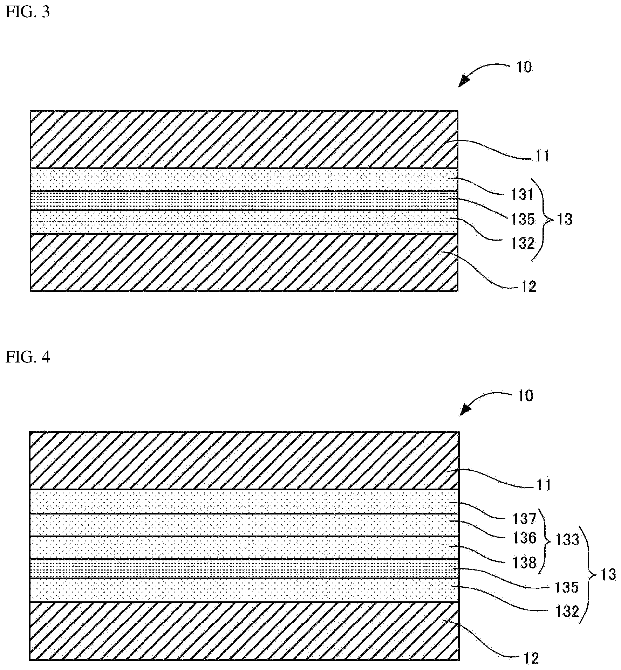

As shown in Fig. 3, the interlayer 13 of the first aspect includes a transparent first bonding layer 131 bonded to the outer glass plate 11, a transparent second bonding layer 132 bonded to the inner glass plate 12, and a reflective film 135 disposed between these bonding layers 131 and 132.

The first bonding layer 131 and the second bonding layer 132 are not particularly limited as long as they are bonded to the glass plates 11 and 12 by fusion, but they may be formed of, for example, a polyvinyl butyral resin (PVB), an ethylene vinyl acetate resin (EVA), or the like. The hardness of the polyvinyl acetal resin may be typically controlled by (a) the polymerization degree of polyvinyl alcohol as a starting material, (b) the acetalization degree, (c) the type of plasticizer, (d) the addition proportion of plasticizer, and the like.

Embossing may be performed on the surfaces of the first bonding layer 131 and the second bonding layer 132 before bonding to the glass plates 11 and 12 in order to easily push out air when bonding to the reflective film 135 or bonding to the glass plates 11 and 12.

The thicknesses of the first bonding layer 131 and the second bonding layer 132 are not particularly limited, but are, for example, preferably 0.001 to 2.0 mm, and more preferably 0.1 to 1.0 mm. However, the thicknesses of the bonding layers 131 and 132 may be the same or different from each other.

The total thickness of both the bonding layers 131 and 132 is preferably 0.76 mm or more. This is to ensure penetration resistance performance and the like as defined in, for example, JIS R3211 and R3212, in the windshield.

The reflective film 135 is not particularly limited as long as the surface facing the vehicle interior side constitutes a reflective surface, and is capable of reflecting image light emitted from the HUD device toward the windshield to the vehicle interior side and improving visibility of the reflected image. Examples of the reflective film 135 used in the present embodiment include a hologram film, a transparent screen of a scattering reflection system, a transparent screen of a scattering transmission system, a light control film of a scattering reflection system, a light control film of a scattering transmission system, an enhanced reflective film for HUD, and a P-polarized reflection film. The interlayer is configured such that the reflective surface of the reflective film 135 is substantially parallel to the surface of the inner glass plate 12 on the vehicle interior side. The same applies to the second aspect described below.

### <1-2-2. Second Aspect>

As shown in Fig. 4, in the interlayer 13 of the second aspect, a sound insulating layer 133 is disposed instead of the first bonding layer 131 of the first aspect. The sound insulating layer 133 may be formed of three layers in which a soft core layer 136 is sandwiched between a pair of outer layers 137 and 138 harder than the soft core layer. The sound insulating layer is not limited to this configuration, and it may be formed of a plurality of layers including the core layer 136 and at least one outer layer disposed on the outer glass plate 11 side.

The hardness of the core layer 136 is not particularly limited as long as it is softer than the outer layers 137 and 138. The material constituting each of the layers 136 to 138 is not particularly limited, but for example, the material may be selected based on Young's modulus. Specifically, the Young's modulus of the core layer 136 is preferably 1 to 20 MPa, more preferably 1 to 18 MPa, and particularly preferably 1 to 14 MPa at a frequency of 100 Hz and a temperature of 20 degrees. Within such a range, it is possible to prevent a decrease in the sound transmission loss (STL) in a low frequency range of approximately 3500 Hz or less. On the other hand, the Young's modulus of the outer layers 137 and 138 is preferably large in order to improve the sound insulation performance in a high frequency range, and it may be 560 MPa or more, 600 MPa or more, 650 MPa or more, 700 MPa or more, 750 MPa or more, 880 MPa or more, or 1300 MPa or more at a frequency of 100 Hz and a temperature of 20 degrees. The upper limit of the Young's modulus of the outer layer 522 is not particularly limited, but it may be set, for example, from the viewpoint of processability. For example, it is empirically known that when the Young's modulus is 1750 MPa or more, processability, in particular, cutting becomes difficult.

As a specific material, the outer layers 137 and 138 may be made of, for example, polyvinyl butyral resin (PVB). The polyvinyl butyral resin is preferable because it is excellent in bonding property to the outer glass plate 11 and penetration resistance. On the other hand, the core layer 136 may be made of, for example, ethylene vinyl acetate resin (EVA) or polyvinyl acetal resin softer than the polyvinyl butyral resin constituting the outer layer. Sandwiching the soft core layer between the outer layers makes it possible to greatly improve the sound insulation performance while maintaining the same bonding property and penetration resistance as those of a single-layered resin interlayer.

The thickness of the core layer 136 is not particularly limited, but it is, for example, preferably 0.1 to 2.0 mm, and more preferably 0.1 to 0.6 mm. The thickness of each of the outer layers 137 and 138 is not particularly limited, but it is, for example, preferably 0.1 to 2.0 mm, and more preferably 0.1 to 1.0 mm.

In either the first aspect or the second aspect, the reflective film 135 may have the same size as the glass plates 11 and 12, but the reflective film may be formed smaller than the glass plates 11 and 12. For example, the reflective film may be formed such that the edge of the reflective film 135 is positioned 10 to 20 mm inside the edges of the glass plates 11 and 12. In this case, since the peripheral edges of the first bonding layer 131 (or the sound insulation layer 133, the same applies hereinafter) and the second bonding layer 132 bond to each other, and they are integrated by an autoclave to be described later, there is a possibility that the first bonding layer 131 and the second bonding layer 132 cannot be distinguished from each other at the peripheral edge. Even in such a case, there is no change in that the first bonding layer 131 is disposed on the outer glass plate 11 side with respect to the reflective film 135 and the second bonding layer 132 is disposed on the inner glass plate 12 side with respect to the reflective film except for the peripheral edge.

In addition, a film or a device having functions such as infrared ray reflection, light emission, power generation, light adjustment, visible light reflection, scattering, decoration, absorption, and electric heating may be provided between the glass plates 210 and 220 of the glass plates 11 and 12 in addition to the interlayer 13 or in the interlayer 13 as long as the effects of the present embodiment described later are not impaired. A film having functions such as anti-fog, water repellency, heat shielding, and low reflection may be disposed on the surface of at least one of the glass plates 11 and 12.

### <1-2-3. Third Aspect>

An infrared ray reflection layer may be provided on the interlayer 13 of the first aspect. The infrared ray reflection layer may be disposed on the vehicle exterior side with respect to the reflecting film 135. For example, the infrared reflecting layer may be disposed at least at one position among between the reflective film 135 and the first bonding layer 131, between the first bonding layer 131 and the outer glass plate 11, in the first bonding layer 131, and on the surface of the outer glass plate 11 on the vehicle exterior side. When the infrared ray reflection layer is disposed in the first bonding layer 131, the first bonding layer 131 is formed of a plurality of layers, and the infrared ray reflection layer may be disposed between any adjacent layers, for example. The infrared ray reflection layer is not particularly limited as long as it is a film that reflects heat rays. For example, multiple laminated infrared ray reflection layers can be formed by alternately laminating an oxide layer and a metal layer (Ag, oxide lamination) on a resin film serving as a base material such as PET. The infrared ray reflection layer may also be formed of one layer. A layer having another function such as a protective layer may be formed on the main surface not in contact with the resin film.

When the thickness of the inner glass plate 12 is reduced or the amount of Fe₂O₃ in the inner glass plate 12 is reduced in order to increase the visible light transmittance, the infrared transmittance of the entire windshield increases. Thus, taking the above configuration to suppress the transmission of infrared rays has technical significance.

### <1-2-4. Fourth Aspect>

At least the first bonding layer 131 among the first bonding kayer 131 and the second bonding layer 132 of the first aspect contains at least one of an infrared ray absorber and an ultraviolet ray absorber.

In the interlayer 13, to impart heat shielding properties, the first bonding layer 131 may contain, for example, oxide fine particles having a heat ray cutting function. As the oxide fine particles, tin-doped indium oxide (ITO), antimony-doped tin oxide (ATO), aluminum-doped zinc oxide (AZO), and the like are suitably used. The content of these oxide fine particles is preferably 0.13 to 3.0 parts by weight with respect to 100 parts by weight of the polyvinyl acetal resin constituting the first bonding layer 131. When the content is less than 0.13 parts by weight, the infrared ray cutting effect may be hardly exhibited, and conversely, when the content is more than 3.0 parts by weight, the transmittance of visible light may deteriorate.

As a result of reducing the amount of infrared rays reaching the second bonding layer 132 in this manner, deterioration of the second bonding layer 132 can be suppressed, and the light resistance of the entire interlayer 13 is enhanced. Thus, high visible light transmittance can be maintained over a long period of time. Further, for example, when the second bonding layer 132 contains a heat shielding compound such as heat shielding particles, deterioration of the heat shielding compound can also be inhibited, and high heat shielding properties can be maintained over a long period of time.

When the reflective film 135 is irradiated with ultraviolet rays, deterioration such as significant discoloration occurs in a short time, and one of the reasons for this is considered to be that some of the atoms constituting the resin composition contained in the reflective film 135 are dissociated by energy such as ultraviolet rays, and the dissociated atoms are molecularized. Thus, the interlayer 13 preferably contains an ultraviolet ray shielding material. Examples of the ultraviolet ray shielding material include platinum particles, palladium particles, compounds having a benzotriazole structure or a benzophenone structure, zinc oxide, titanium oxide, and cerium oxide.

The interlayer 13 may contain one or two or more of various additives typically used for interlayers for laminated glasses, such as an ultraviolet absorber, a light stabilizer, an antioxidant, a bonding force modifier, a surfactant, and a colorant, as necessary.

The ultraviolet absorber is not particularly limited, and examples thereof include benzotriazole-based ultraviolet absorbers such as trade names "Tinuvin P", "Tinuvin 320", "Tinuvin 326", and "Tinuvin 328" manufactured by Ciba-Geigy, and one or two or more of these are suitably used. The addition amount of the ultraviolet absorber is usually about 0.01 to 2 mass% and preferably 0.1 to 1 mass% in each of the bonding layers 131 and 132.

The ultraviolet absorber and the infrared absorber may be contained only in the first bonding layer 131. Alternatively, the ultraviolet absorber and the infrared absorber may be contained in both the bonding layers 131 and 132, and the content in the first bonding layer 131 may be made larger than the content in the second bonding layer 132.

When the thickness of the inner glass plate 12 is reduced or the amount of Fe₂O₃ in the inner glass plate 12 is reduced in order to increase the visible light transmittance, the infrared transmittance and the ultraviolet ray transmittance of the entire windshield increases. Thus, taking the above configuration to suppress the transmission of infrared rays and ultraviolet rays has technical significance. In addition, deterioration of the reflective film including the P-polarized reflection film can be inhibited by not transmitting ultraviolet rays.

### <2. Mask Layer>

Next, the mask layer 110 will be described. As illustrated in Figs. 1 and 2, in the present embodiment, the mask layer 110 is laminated on the inner surface 130 of the laminated glass 10 on the vehicle interior side (the inner surface of the inner glass plate 12), and is formed along the peripheral edge of the laminated glass 10. Specifically, as shown in Fig. 1, the mask layer 110 can be divided into a peripheral edge region 111 along the peripheral edge of the laminated glass 10 and a protruding region 112 protruding downward in a rectangular shape from the upper side portion of the laminated glass 10. The peripheral region 111 shields the entrance of light from a peripheral edge of the windshield. When the reflective film 135 is smaller than the glass plates 11 and 12, the peripheral edge can be hidden by the peripheral edge region 111. This can reduce the driver's feeling of glare due to sunlight or the like entering the vehicle from a region where the reflective film 135 is not disposed. On the other hand, the protruding region 112 makes the imaging device 2 disposed in the vehicle invisible from the outside of the vehicle.

However, when the mask layer 110 shields the imaging range of the imaging device 2, the imaging device 2 cannot image the circumstance in front of and outside the vehicle. Thus, in the present embodiment, the imaging window 113 having a rectangular shape is provided at a position corresponding to the imaging device 2 in the protruding region 112 of the mask layer 110 so that the imaging device 2 can image the circumstance of the outside of the vehicle.

The mask layer 110 may be laminated on, for example, the inner surface of the outer glass plate 11 and the outer surface of the inner glass plate 12 in addition to being laminated on the inner surface of the inner glass plate 12 as described above. The mask layer may also be laminated at two positions of the inner surface of the outer glass plate 11 and the inner surface of the inner glass plate 12.

Next, the material of the mask layer 110 will be described. The material of the mask layer 110 may be appropriately selected according to the embodiment as long as it can shield the field of view from the outside of the vehicle, and for example, a dark color ceramic such as black, brown, gray, and deep blue may be used.

When black ceramic is selected as the material of the mask layer 110, for example, black ceramic is laminated on the peripheral edge on the inner surface 130 of the inner glass plate 12 by screen printing or the like, and the laminated ceramic is heated together with the inner glass plate 12. The mask layer 110 can be thus formed on the peripheral edge of the inner glass plate 12. When the black ceramic is printed, a region where the black ceramic is not printed is partially provided. The imaging window 113 can be thus formed. Various materials can be used as the ceramic used for the mask layer 110. For example, a ceramic having a composition shown in Table 1 below can be used for the mask layer 110.

**[Table 1]**

| | | First and second colored ceramic paste |
|---|---|---|
| Pigment *1 | mass% | 10 |
| Resin (cellulose resin) | mass% | 10 |
| Organic solvent (pine oil) | mass% | 10 |
| Glass binder *2 | mass% | 70 |
| Viscosity | dPs | 150 |

| | | |
|---|---|---|
| *1, Main component: Copper oxide, chromium oxide, iron oxide, and manganese oxide *2, Main component: Bismuth borosilicate and zinc borosilicate | | |

### <3. In-Vehicle System>

Next, the in-vehicle system 5 including the imaging device 2 and the image processing device 3 will be described with reference to Fig. 5. Fig. 5 illustrates a configuration of the in-vehicle system 5. As illustrated in Fig. 5, the in-vehicle system 5 according to the present embodiment includes the imaging device 2 and the image processing device 3 connected to the imaging device 2.

The image processing device 3 is a device that processes a captured image acquired by the imaging device 2. The image processing device 3 has, for example, typical hardware such as a storage unit 31, a control unit 32, and an input/output unit 33 connected by a bus as a hardware configuration. However, the hardware configuration of the image processing device 3 is not limited to such an example, and regarding the specific hardware configuration of the image processing device 3, components can be added, omitted, and added as appropriate according to the embodiment.

The storage unit 31 stores various data and programs used in the processing executed by the control unit 32 (not illustrated). The storage unit 31 may be realized by, for example, a hard disk or a recording medium such as a USB memory. The various data and programs stored in the storage unit 31 may be acquired from a recording medium such as a compact disc (CD) or a digital versatile disc (DVD). Further, the storage unit 31 may be referred to as an auxiliary storage device.

As described above, the laminated glass 10 is disposed in an inclined manner with respect to the vertical direction and is curved. Then, the imaging device 2 captures an image of the circumstance of the outside of the vehicle through such laminated glass 10. Thus, the captured image acquired by the imaging device 2 is deformed according to the orientation, shape, refractive index, optical defect, and the like of the laminated glass 10. Aberrations unique to the camera lens of the imaging device 2 are also added. Thus, the storage unit 31 may store correction data for correcting the image deformed by such the laminated glass 10 and the aberrations of the camera lens.

The control unit 32 includes one or a plurality of processors such as a microprocessor or a central processing unit (CPU), and a peripheral circuit (ROM (Read Only Memory), RAM (Random Access Memory), interface circuit, and the like) used for processing of the processor. The ROM, the RAM, and the like may be referred to as a main storage device in the sense that they are disposed in an address space handled by the processor in the control unit 32. The control unit 32 functions as an image processing unit 321 by executing various data and programs stored in the storage unit 31.

The image processing unit 321 processes the captured image acquired by the imaging device 2. The processing of the captured image can be appropriately selected according to the embodiment. For example, the image processing unit 321 may recognize a subject appearing in the captured image by analyzing the captured image by pattern matching or the like. In the present embodiment, since the imaging device 2 captures an image of the circumstance in front of the vehicle, the imaging unit 321 may further determine whether or not a living object such as a human is captured in the image in front of the vehicle based on the subject recognition. Then, when a person is captured in the image in front of the vehicle, the image processing unit 321 may output a warning message by a predetermined method. Further, for example, the image processing unit 321 may perform predetermined processing on the captured image. Then, the image processing unit 321 may output the processed captured image to a display device (not illustrated) such as a display connected to the image processing device 3.

The input/output unit 33 is one or a plurality of interfaces for transmitting/receiving data to/from a device present outside the image processing device 3. The input/output unit 33 is, for example, an interface for connection with a user interface or an interface such as a universal serial bus (USB). In the present embodiment, the image processing device 3 is connected to the imaging device 2 via the input/output unit 33, and acquires the captured image taken by the imaging device 2.

For such an image processing device 3, a general-purpose device such as a personal computer (PC) or a tablet terminal may be used in addition to a device designed exclusively for a service to be provided.

The information acquisition device is attached to a bracket (not illustrated), and the bracket is attached to the mask layer 110. Thus, in this state, the attachment of the information acquisition device to the bracket and the attachment of the bracket to the mask layer are adjusted such that the optical axis of the camera of the information acquisition device passes through the imaging window 113. A cover (not illustrated) is attached to the bracket to cover the imaging device 2. Thus, the imaging device 2 is disposed in a space surrounded by the laminated glass 10, the bracket, and the cover, the device cannot be seen from the vehicle interior side, and only a part of the imaging device 2 can be seen from the vehicle exterior side through the imaging window 113. Then, the imaging device 2 and the above-described input/output unit 33 are connected by a cable (not illustrated), and the cable is pulled out from the cover and connected to the image processing device 3 disposed at a predetermined position in the vehicle.

### <4. Measures for Inhibiting Double Image Caused by Image Light of HUD Device>

Next, measures for inhibiting double image caused by image light of the HUD device will be described. In the present embodiment, as the measures, the luminance of the image light reflected by the reflective surface is increased (or the luminance is inhibited from decreasing), and the main image A shown in Fig. 6 is made more easily visible than the sub image B. Details will be described below.

### <4-1. Measure 1>

The thickness of the inner glass plate 12 is made smaller than the thickness of the outer glass plate 11. Since the glass plate normally absorbs a part of light such as image light, reducing the thickness of the inner glass plate 12 can makes it possible to reduce attenuation of the image light reaching the reflective film 135. As a result, the luminance of the image light reflected by the reflective surface can be increased. For example, the inventor of the present invention has confirmed that the thickness of a typical inner glass plate 12 is 2.3 mm, and the double image is reduced by setting the thickness to, for example, about 2.0 mm or less.

### <4-2. Measure 2>

The visible light transmittance of the inner glass plate 12 is made larger than the visible light transmittance of the outer glass plate 11. Increasing the visible light transmittance of the inner glass plate 12 makes it possible to reduce attenuation of image light reaching the reflective film 135. As a result, the luminance of the image light reflected by the reflective surface can be increased. For example, the inventor of the present invention has confirmed that the visible light transmittance of a typical inner glass plate 12 is 84%, and the double image is reduced by setting (correcting) the visible light transmittance to, for example, about 90% or more. As a combination of such glass plates, for example, the outer glass plate 11 and the inner glass plate 12 may be each made of green glass, and among them, the inner glass plate 12 may be made of green glass with a reduced iron oxide content. Alternatively, the outer glass plate 11 and the inner glass plate 12 may be made of green glass (or dark green glass) and clear glass, respectively.

### <4-3. Measure 3>

The distance between the reflective surface of the reflective film 135 and the surface of the inner glass plate 12 on the vehicle exterior side is set smaller than the distance between the reflective surface and the surface of the outer glass plate 12 on the vehicle interior side. For example, in the interlayer 13 of the first aspect described above, the thickness of the second bonding layer 132 can be made smaller than the thickness of the first bonding layer 131. Since the bonding layer made of resin typically absorbs a part of light such as image light, reducing the thickness of the second bonding layer 132 can makes it possible to reduce attenuation of the image light reaching the reflective film 135. As a result, the luminance of the image light reflected by the reflective surface can be increased. For example, the inventor of the present invention has confirmed that the double image is reduced by setting the thickness of the second bonding layer 132 to a thickness of about 0.1 mm or less.

### <4-4. Measure 4>

A low reflection layer (not illustrated) is disposed on the surface of the inner glass plate 12 on the vehicle interior side. As a result, the reflected light from the inner glass plate 12 that forms the sub image is attenuated, and the sub image becomes difficult to be visually recognized. Thus, the luminance of the image light reflected by the reflective surface relatively increases. Such a low reflection layer is not particularly limited, and a known low reflection layer can be used. For example, a low reflection layer including a hollow fine particle film, a multilayer film, a low refractive index film, or the like can be adopted.

### <4-5. Measure 5>

As the interlayer 13, the above-described second aspect is adopted. In the second aspect, the sound insulating layer 133 formed of a plurality of layers is disposed on the outer glass plate 11 side with respect to the reflective film 135. Since such a sound insulating layer 133 may cause attenuation of image light, when the sound insulating layer is not disposed on the inner glass plate 12 side but is disposed on the outer glass plate 11 side with respect to the reflective film 135, reduction in luminance of image light reflected by the reflective surface can be inhibited.

The measures 1 to 5 can be appropriately combined.

### <5. Method for Producing Windshield>

Next, an example of a method for producing the windshield configured as described above will be described. First, a method for producing the laminated glass 1 will be described.

First, the above-described mask layer 110 is laminated on at least one of the outer glass plate 11 and the inner glass plate 12 having a flat plate shape. Next, the glass plates 11 and 12 are formed into a curved shape. The forming method is not particularly limited, and a known method can be adopted. For example, after a flat glass plate passes through a heating furnace, the flat glass plate can be formed into a curved shape by pressing with an upper die and a lower die. Alternatively, flat plate-shaped outer glass plate and inner glass plate are stacked, disposed on a molding die of a frame mold, and passed through a heating furnace. As a result, both glass plates are softened and formed into a curved shape by their own weight.

After the outer glass plate 11 and the inner glass plate 12 are formed into a curved shape in this manner, the interlayer 13 described above is sandwiched between the outer glass plate 11 and the inner glass plate 12, and the obtained mateiral is put in a rubber bag and preliminarily bonded at about 70 to 110°C while being sucked under reduced pressure. At this time, the reflective film 135 constituting the interlayer 13, the film constituting the bonding layers 131 and 132, and the like are stacked and disposed between the glass plates 11 and 12. Another method can be taken as the method of preliminary bonding. For example, the interlayer 13 is sandwiched between the outer glass plate 11 and the inner glass plate 12, and heated at 45 to 65°C by an oven. Subsequently, the laminated glass is pressed with a roll at 0.45 to 0.55 MPa. Next, this laminated glass is heated again at 80 to 105°C by an oven, and then pressed again by a roll at 0.45 to 0.55 MPa. The preliminary bonding is thus completed.

Next, main bonding is performed. The preliminarily bonded laminated glass is fully bonded by an autoclave at, for example, 8 to 15 atm and 100 to 150°C. Specifically, for example, the main bonding can be performed under the condition of 14 atm and 145°C. The laminated glass 1 according to the present embodiment is thus produced.

### <6. Features>

According to the windshield described above, since the luminance of the image light reflected by the reflective surface can be increased (or the luminance can be inhibited from decreasing), the main image A can be visually recognized more easily than the sub image B. As a result, the HUD device allows the image appearing on the reflective surface to be easily seen, which can reduce discomfort.

### <7. Modification>

Although one embodiment of the present invention has been described above, the present invention is not limited to the above embodiment, and various modifications can be made without departing from the gist thereof. The modifications described below can be appropriately combined.

### <7-1>

The reflective film 135 may be disposed only in a region irradiated with image light from the HDU device 500, or may be disposed in most of the other regions of the glass plates 11 and 12.

### <7-2>

The shape of the mask layer 110 is an example, the configuration is not particularly limited, and the shape can be appropriately changed according to a device or the like to be provided.

### <7-3>

In the above embodiment, the imaging device 2 is disposed with the imaging window 113 formed in the mask layer 110, but such an imaging window 113 or imaging device 5 does not have to be provided.

### <7-4>

When the reflective film 135 is smaller than the glass plates 11 and 12, there is a possibility that the driver feels glare due to sunlight entering the vehicle from a region where the reflective film 135 is not disposed in the peripheral edges of the glass plates 11 and 12. To inhibit this, the visible light transmittance can be reduced within the legal range by increasing the thickness of the outer glass plate 11 or making the glass plate dark. For example, the visible light transmittance of the outer glass plate 11 can be set to about 73 to 82%.

### Examples

Hereinafter, Examples of the present invention will be described. The present invention is not limited to the following Examples.

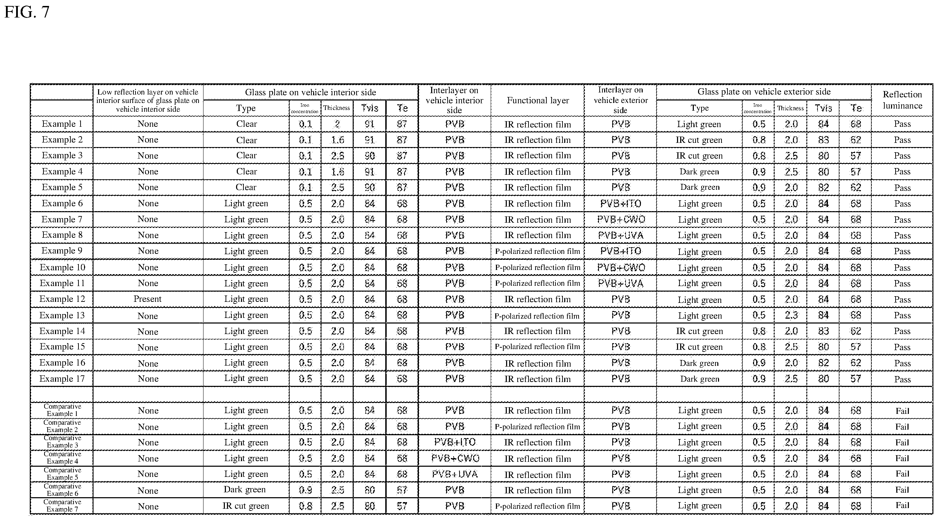

Windshields according to Examples 1 to 17 and Comparative Examples 1 to 7 having compositions and physical properties as shown in Fig. 7 were produced. The unit of the iron concentration of each glass plate in Fig. 7 is wt%, and the unit of the thickness is mm. Tvis is visible light transmittance (%), and Te is solar transmittance (defined in JIS 3106:2019). The glass plate having higher Te has higher performance of cutting infrared rays. In addition, since the reflective film is deteriorated by infrared rays, when a glass plate having high Te is used as the outer glass plate, there is an advantage that the performance of the reflective film can be maintained for a long period of time.

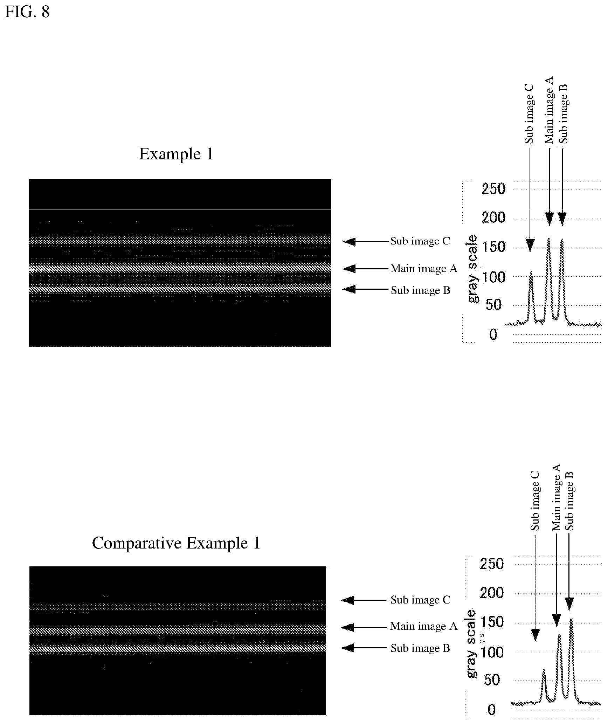

The reflection luminance was measured for Examples 1 to 17 and Comparative Examples 1 to 7. The reflection luminance was measured as follows. The reflected light (sub image B) of the inner glass plate and the reflected light (main image A) of the reflective film were photographed, and the reflection luminance was defined by 256 gradations of the photographed reflected light. Since the sub image C is reflected light on the surface of the outer glass plate on the vehicle exterior side, the sub image C is not evaluated in the present invention. As shown in Fig. 8, when Example 1 is compared with Comparative Example 1, in the taken photograph, the main image A of Example 1 more clearly appears than the main image A of Comparative Example 1. When these brightness values are compared, the gradation value of the main image is 150 or more in Example 1, whereas it is less than 150 in Comparative Example 1. This tendency was similar in other Examples and Comparative Examples. That is, the gradation value of the main image A was 100 or more in all the examples, and the gradation value of the main image A was 80 or less in all the comparative examples. In addition, since the main image of the comparative examples was difficult to be seen even in the taken photograph, the reflection luminance was determined to be unacceptable.

### Reference Signs List

1 Windshield
11 Outer glass plate
12 Inner glass plate
13 Interlayer
131 First bonding layer
132 Second bonding layer
135 Reflective film

## Claims

1. A windshield configured to make image light including visible light from a head-up display device attached inside a vehicle enter from an inclined direction, the windshield comprising:
an inner glass plate disposed on a vehicle interior side;
an outer glass plate disposed opposite the inner glass plate on a vehicle exterior side; and
an interlayer that bonds the outer glass plate and the inner glass plate to each other,
wherein the interlayer includes a reflective film having a reflective surface capable of reflecting the image light, and
a luminance of the image light reflected by the reflective surface is increased.

2. The windshield according to claim 1, wherein the inner glass plate has a visible light transmittance larger than a visible light transmittance of the outer glass plate.

3. The windshield according to claim 1, wherein the inner glass plate has a thickness larger than a thickness of the outer glass plate.

4. The windshield according to claim 1, wherein total iron oxide (T-Fe₂O₃) converted into Fe₂O₃ in a composition of the inner glass plate is smaller than total iron oxide converted into Fe₂O₃ in a composition of the outer glass plate.

5. The windshield according to claim 4, wherein the total iron oxide (T-Fe₂O₃) converted into Fe₂O₃ in the composition of the inner glass plate is smaller than 0.6 wt%.

6. The windshield according to claim 4, wherein the total iron oxide (T-Fe₂O₃) converted into Fe₂O₃ in the composition of the outer glass plate is larger than 0.3 wt%.

7. The windshield according to claim 1, wherein a low reflection layer is disposed on a surface of the inner glass plate, the surface being on the vehicle interior side.

8. The windshield according to claim 1, wherein
the interlayer further includes:
a first bonding layer disposed between the reflective film and the outer glass plate; and
a second bonding layer disposed between the reflective film and the inner glass plate,
at least one of the first bonding layer and the second bonding layer contains an ultraviolet absorber and/or an infrared absorber, and
an addition amount of the ultraviolet absorber and/or the infrared absorber in the first bonding layer is larger than an addition amount of the ultraviolet absorber and/or the infrared absorber in the second bonding layer.

9. The windshield according to claim 1, wherein
the interlayer further includes:
a first bonding layer disposed between the reflective film and the outer glass plate; and
a second bonding layer disposed between the reflective film and the inner glass plate,
the first bonding layer contains at least one of an ultraviolet absorber and/or an infrared absorber, and
the second bonding layer contains no ultraviolet absorber and no infrared absorber.

10. The windshield according to claim 1, the windshield further comprising an infrared ray reflection layer disposed on the vehicle exterior side with respect to the reflective film.

11. The windshield according to claim 10, wherein the infrared ray reflection layer is provided on the outer glass plate.

12. The windshield according to claim 10, wherein
the interlayer further includes:
a first bonding layer disposed between the reflective film and the outer glass plate; and
a second bonding layer disposed between the reflective film and the inner glass plate, and
the infrared reflective film is disposed in the first bonding layer.

13. The windshield according to claim 10, wherein the infrared ray reflection layer is formed of multiple layers.
